# EUROPÄISCHE PATENTSCHRIFT

(11) **EP 1 204 716 B1**
(45) Veröffentlichungstag und Bekanntmachung des Hinweises auf die Patenterteilung: **27.07.2011**
(21) Anmeldenummer: 00960340.8
(22) Anmeldetag: 02.08.2000
(51) Int. Cl.: C10B 53/00, C10B 47/40, C10B 51/00, C10J 3/00

(54) **VERFAHREN UND VORRICHTUNG ZUM BESEITIGEN VON ABPRODUKTEN UND ABFALLSTOFFEN**
METHOD AND DEVICE FOR REMOVING RECOVERABLE WASTE PRODUCTS AND NON-RECOVERABLE WASTE PRODUCTS
PROCEDE ET DISPOSITIF PERMETTANT D'ENLEVER LES PRODUITS DE RECUPERATION ET LES DECHETS

(30) Priorität: 03.08.1999 DE 19937524
(43) Veröffentlichungstag der Anmeldung: 15.05.2002
(73) Patentinhaber: Martin, Harald, 06567 Bad Frankenhausen (DE); Streitenberger, Hartwig, 07751 Golmsdorf (DE)
(72) Erfinder: Martin, Harald, 06567 Bad Frankenhausen (DE); Streitenberger, Hartwig, 07751 Golmsdorf (DE)
(74) Vertreter: Rauschenbach, Marion
(86) Internationale Anmeldenummer: PCT/DE2000/002659
(87) Internationale Veröffentlichungsnummer: WO 2001/009267

(56) Entgegenhaltungen:
- EP-A- 0 280 364
- EP-A- 0 426 925
- EP-A1- 0 360 052
- WO-A-00/17288
- WO-A-99/04197
- DE-A- 2 546 801
- US-A- 1 972 929
- US-A- 4 123 332
- US-A- 4 412 889
- US-A- 4 501 644

## Beschreibung

### Technisches Gebiet

Die Erfindung bezieht sich auf die Gebiete der Papierindustrie, der Abfallwirtschaft und des Maschinenbaus und betrifft ein Verfahren und eine Vorrichtung zur Beseitigung von Abprodukten und Abfallstoffen, insbesondere von Abfallstoffen, die in der Papierindustrie anfallen und einer möglichst umfassenden Verwertung zugeführt werden sollen.

### Stand der Technik

Bei der Verarbeitung von Altpapier im Recyclingprozeß verbleiben nach dem Aufschlämmen der mechanisch arbeitenden Entschlämmung Reststoffe. Diese Reststoffe können in unterschiedlicher Menge, Konzentration und Art verklumptes Papier, Pappreste, Plaststücke, Holzrückstände, Metallteile und anderes mehr enthalten. Die Gesamtheit dieser Reststoffe werden als Spuckstoffe bezeichnet.
Diese Spuckstoffe werden nach dem Austritt aus dem Schlämmprozeß und gegebenenfalls nach einer Zwischenlagerung, bei der eine gravimetrische Entwässerung stattfinden kann, im allgemeinen auf einer Sondermülldeponie gelagert.
Diese Spuckstoffe enthalten zu diesem Zeitpunkt durchschnittlich 50 % Wasser, welches als Oberflächenwasser und auch als aufgesaugtes Wasser im Papier- und Holzanteil vorkommen kann.

Es sind bereits verschiedene Verfahren und Vorrichtungen bekannt oder beschrieben worden, die die Verwertung und insbesondere thermische Behandlung von Abfällen, Reststoffen und auch Spuckstoffen beinhalten.

Nach der DE 41 39 512 A1 ist ein Verfahren zur thermischen Verwertung von Abfallstoffen bekannt. Die Abfallstoffe sind dabei Hausmüll, kunststoffhaltige Industrieabfälle, Farbrückstände, Altreifen, Shredder-Leichtgut der Autoverwertung oder mit Ölen kontaminierte Abfälle. Nach diesem Verfahren werden diese Abfallstoffe ohne aufwendige Vorbehandlungen einer Kombination von bekannten Verfahrensstufen, wie Pyrolyse, Zerkleinerung, Klassierung, Vergasung und Gasreinigung unterworfen. Dabei soll dieses Verfahren einerseits zur Erzeugung eines sauberen, vielseitig stoffwirtschaftlich und energetisch einsetzbaren Gases dienen und andererseits eluationsfeste, verwertbare oder einfach zu deponierende rein mineralische, feste Rückstände hervorbringen und gleichzeitig toxische Belastungen der Umwelt ausschließen.

Weiterhin sind nach der DE 44 41 423 ein Verfahren und eine Vorrichtung bekannt, die zur Gewinnung von verwertbarem Gas aus Müll durch Pyrolyse dienen. Bei diesem Verfahren wird der zerkleinerte Müll in eine gasdicht abgeschlossene Pyrolysetrommel eingebracht, in der das Pyrolysegas erzeugt und der Pyrolysereststoff abgetrennt wird. Das Pyrolysegas wird in einem Gaswandler unter Zufuhr von Luft und in Gegenwart eines glühenden Koksbettes zu einem Spaltgas gespalten. Die für die Pyrolyse notwendige Wärme wird durch ein Gas im direktem Kontakt mit dem zu pyrolysierenden Gut übertragen. Ein Teilstrom dieses Gases ist das aus dem Gaswandler austretende Spaltgas.

Es ist weiterhin ein Verfahren zur Verwertung eines Ausgangsmaterials nach der DE 43 34 544 bekannt. Bei diesem Verfahren wird das Ausgangsmaterial aus polymerem oder sonstigem Verpackungsmaterial mit oder ohne Inhaltsresten, die verschwelbar oder nicht oder pyrolysierbar oder nicht sind, in einen Reaktionsraum gebracht. In diesem Reaktionsraum werden die verschwelbaren Bestandteile verschwelt und die pyrolysierbaren Bestandteile pyrolysiert, wobei die entstehenden Gase als Energieträger für eine Feuerung benutzt und die Rückstände für eine Weiterbehandlung ausgetragen werden.

Nach der DE 42 09 549 ist ein Verfahren zur thermischen Behandlung von Reststoffen bekannt, z.B. zur Trennung und Verwertung von Metallverbunden mit organischen Anteilen mittels einer Kombination aus Pyrolyse und Vergasung. Gemäß diesem Verfahren werden die Reststoffe mittels einer Pyrolyse bei 300 bis 700 °C in eine Gas- und eine Feststoffphase getrennt und aufgeschlossen. Aus der Feststoffphase werden vorhandene verwertbare Produkte abgetrennt und die verbleibenden Stoffe werden gemeinsam mit der Gasphase bei Temperaturen > 1300 °C mit einer sauerstoffangereicherten Luft oder Sauerstoff zu Brenngas vergast.

Es ist auch nach der DE 36 32 105 ein Verfahren zur Entfernung von spaltbaren Verunreinigungen aus einem Pyrolysegas bekannt. Danach wird das Pyrolysegas, welches bei der Pyrolyse eines Kohlenstoff und/oder Kohlenwasserstoff enthaltenden Materials entstanden ist, zugleich mit einem in einem Plasmagenerator erhitzten Gas einer Reaktionskammer zugeleitet und dort die Verunreinigungen abgespalten, so daß das Gas nun direkt dem Verbraucher zugeführt werden kann.

Auch bekannt ist nach der DE 38 26 520 A1 ein Verfahren zur Pyrolyse von Klärschlamm in einem außenbeheizten feststehenden Reaktor mit einer innengelagerten Transporteinrichtung, bei der die Pyrolyse als steuerbarer, räumlich und zeitlich getrennter Prozeß in mehreren Stufen der Trocknung, der Aufheizung auf Zersetzungstemperatur, Pyrolyse in mehreren Temperaturbereichen und Verwertung der Pyrolyserückstände als Brennstoff durchgeführt wird.
Die erste Stufe ist dabei die Entwässerung des Klärschlammes, die zweite Stufe die Aufheizung der getrockneten Produkte auf 200 - 250 °C, die dritte Stufe ist die thermische Zersetzung des Klärschlammes zu Pyrolysegasen und einem kohtenstoffhattigen Rückstand bei 251 bis 700 °C, vorzugsweise bei 300 - 500 °C, und die vierte Stufe ist die Verbrennung der entstehenden Pyrolysegase und der Einsatz des Heißgases zur Beheizung des Reaktors in voneinander getrennten Heizzonen gemäß den Stufen 1, 2 und 3.

Weiterhin ist aus der DE 34 17 620 ein Verfahren und eine Vorrichtung bekannt, die zur Erzeugung von in mechanische Energie umformbare Wärmeenergie aus der Verbrennung von nassem Müll dienen. Die Erfindung geht davon aus, daß die im nassen Müll enthaltene Feuchtigkeit entfernt werden muß, bevor dieser verbrannt wird. Dabei kann eine Wärmequelle für die Mülltrocknung der Dampf sein, der aus dem nassen Müll verdampft, oder die andere Wärmequelle ist das Rauchgas aus der Verbrennungsanlage. Die Vorrichtung zur Realisierung dieser Erfindung besteht aus einer Mülltrocknungseinrichtung mit einem Schneckenförderer, einem kontinuierlich rührenden Trockner, einem zweiten Schneckenförderer, einem geschlossenen und isolierten Förderer, einer Luftzuführungskammer, weiterhin einer Luftzuführungseinrichtung mit einem Gebläse und drei Luftvorwärmern, und weiterhin einer Wärmeenergieliefereinrichtung für den Trockner mit einer Druckaufbringungseinrichtung und einer Speiseeinrichtung.

Auch ist aus der DE 42 37 161 A1 eine Vorrichtung zum Aufbereiten von aluminiumhaltigen Materiallen bekannt. Diese Vorrichtung besteht aus einem indirekt beheizten Drehrohrofen mit einer im Inneren eines gasdichten Drehrohres angeordneten Fördereinrichtung, zwei Schleusen und einem Aufgabebunker und einer Siebrüttelanlage. Die Fördereinrichtung im Inneren des gasdichten Drehrohres ist eine Transportschnecke, die zur Umwälzung des Aufgabegutes dient.

Es ist aus der DE 195 28 018 A1 weiterhin eine Anlage zur thermischen Behandlung von Materialien mit organischen Bestandteilen bekannt, bei der eine Drehtrommel innerhalb eines mit Heißgas füllbaren Gehäuses Im wesentlichen konzentrisch um eine Welle liegend und mit ihr verbunden, angeordnet ist.

Nach der DE 43 37 421 A1 ist eine mehrstufige Hochtemperaturverbrennung von Abfallstoffen mit Inerkbestandteilen und eine Vorrichtung zur Durchführung dieses Verfahrens bekannt. Dabei wird in einem geschlossenen Raum in einer ersten Stufe erst eine unterstöchiometrische Verbrennung und in der zweiten Stufe eine weitere Verbrennung durchgeführt.

Nachteilig bei allen diesen Verfahren und Vorrichtungen ist die Einhaltung von hohen Sicherheitsstandarten, da die eingesetzten Verfahrensstufen, insbesondere die Pyrolyse und die Vergasung, zum Teil unter Luftabschluß und bei hohen Temperaturen durchgeführt werden müssen.

Nach der US 4,412,889 A1 ist ein Pyrolysereaktor bekannt, der aus einer Reaktionskammer, einer Ummantelung der Reaktionskammer, einer Eintragsöffnung für das Pyrolysematerial, wobei der Eintritt von Sauerstoff verhindert wird, einer Kühlung für die Reaktionskammer, einer Transportvorrichtung in der Reaktionskammer und einer Austragsöffnung besteht. Der Energieeintrag in die Reaktionskammer erfolgt indirekt durch Aufheizung des Raumes um die Reaktionskammer innerhalb der Ummantelung.

Weiterhin ist nach DE 25 46 801 A1 eine Einrichtung zur thermischen Behandlung und gleichzeitigen Förderung von körnigen und/oder stückigen Materialien bekannt. In dieser Einrichtung findet die Verbrennung von Abfällen statt. Die Einrichtung besteht aus einer Brennkammer, einer Transportschnecke, wobei über Öffnungen in der Transportschnecke Luft in die Brennkammer eingebracht wird.

Aus der WO 99/04197 A1 ist eine Energierückgewinnungsvorrichtung bekannt, wobei Abfälle in einer Pyrolysebrennkammer pyrolysiert werden und die gasförmigen Pyrolyseprodukte in einen Wärmetauscher eingeleitet werden.

Gemäß der US 4,123,332 A1 ist eine Vorrichtung zur Verkokung von granuliertem Material bekannt. Die Beheizung der Reaktionskammer erfolgt indirekt über einen Mantel um die Brennkammer.

Ebenso ist aus der EP 0 426 925 A1 eine Vorrichtung zur Behandlung von Abfall bekannt, bei der die Beheizung der Brennkammer indirekt erfolgt.

Nach der EP 0 280 364 A1 ist einen Einrichtung zur Zerstörung von halogenierten Aromaten, wie chlorierten Dibenzidioxine, chlorierte Dibenzofurane oder dgl. in Flugasche aus Abfallverbrennungsanlagen bekannt. Diese Einrichtung besteht aus einem Behälter und einer Transportvorrichtung zum Transport der Flugasche durch einen Raum des Behälters. Dieser Raum ist von der äußeren Atmosphäre abgeschlossen und wird indirekt beheizt.

In der EP 0 360 052 A1 wird ein Pyrolysereaktor zur thermischen Abfallentsorgung beschrieben. Als Heizeinrichtung für den Innenraum ist ein Brenner vorgesehen, der den Abfall direkt beheizt. Die festen Pyrolysereststoffe werden einem Austragsbehälter zugeführt, zerkleinert und in einer separaten Brennkammer verbrannt. Getrennt davon wird das Schwelgas dem Brenner zugeführt und mit Sauerstoff zusammen verbrannt. Der Pyrolysereaktor wird gedreht und durch eine Neigung des Reaktors der Transport des Gutes im Reaktor realisiert.

### Darstellung der Erfindung

Die Aufgabe der Erfindung besteht darin, bei einer möglichst geringen Umweltbelastung eine möglichst vollständige Beseitigung der eingesetzten Abprodukte und Abfallstoffe zu erhalten, bei Einsatz einer Vorrichtung, die einfacher handhabbar und leichter regelbar ist.

Durch die erfindungsgemäße Lösung wird es möglich, Abprodukte und Abfallstoffe umweltfreundlich nahezu vollständig aufzuarbeiten und dabei Energie zu gewinnen, die teilweise für die Aufrechterhaltung des erfindungsgemäßen Verfahrens eingesetzt werden kann. Sie kann jedoch auch für andere energieintensive Prozesse verwendet werden.

Die Funktionsweise der erfindungsgemäßen Vorrichtung ist unter Anwendung des erfindungsgemäßen Verfahrens folgende.

Anfallende Abprodukte und Abfallstoffe aus den verschiedensten Bereichen, beispielsweise aus der Papierindustrie (Spuckstoffe) oder aus der Lederindustrie oder auch Hausmüll oder Sondermüll werden antransportiert. Diese Produkte und Stoffe sind sehr inhomogen, aus den verschiedensten anorganischen und organischen Stoffen zusammengesetzt und oft miteinander verpresst oder komprimiert.
Aus diesem Grunde ist es notwendig, diese Produkte und Stoffe zu zerteilen. Dies kann durch an sich bekannte Vorrichtungen in Form von Schreddern, Reißern oder Häckseleinrichtungen erfolgen.

Nach dem Zerteilen der anfallenden Produkte und Stoffe wird eine Selektierung durchgeführt. Diese Selektierung zielt insbesondere auf eine Trennung nach metallischen und nichtmetallischen Stoffen ab. Alle metallischen Stoffe können einer anderen Verwertung zugeführt werden.

Die so aufbereiteten Abprodukte und Abfallstoffe werden dann einer Vorrichtung zu ihrer Vorwärmung und/oder Trocknung zugeführt

Über eine Eintragsöffnung wird das zerteilte und selektierte und gegebenenfalls vorgewärmte und/oder getrocknete Gut in den rohrförmigen Behälter an dessen einer Seite eingebracht.

In dem waagerecht angeordneten, feststehenden rohrförmigen Behälter, der kühlbar oder isolierbar ist, und aus Stahlblech und doppelwandig ausgeführt ist, ist mittig durch den Behälter hindurch eine Welle geführt. An dieser Welle befinden sich Vorrichtungen zum Transport und zur Auflockerung und Vermischung des Gutes in dem Behälter. Durch die Vorrichtungen an der Welle wird das Gut in dem Behälter in Richtung der Austragsöffnung kontinuierlich oder auch diskontinuierlich transportiert. Vorteilhafterweise erfolgt ein kontinuierlicher Guttransport mit einer Geschwindigkeit von 18 m/h zur Austragsöffnung hin.
Die Vorrichtungen an der Welle sind vorteilhafterweise Paddel, die angestellte Flächen aufweisen. Diese Paddel sind ebenfalls vorteilhafterweise durch formschlüssige Keilverbindungen an der Welle befestigt. Dadurch sind sie leicht austauschbar.
Die Welle ist vorteilhafterweise rohrförmig ausgebildet und an jeder Stirnseite des Behälters außerhalb dessen gelagert.
Im unteren Bereich sind Roste im Behälter über dessen gesamte Länge angeordnet, auf denen das Gut lagert und vorwärts In Richtung der Austragsöffnung transportiert wird. Diese Roste ermöglichen den Eintrag der Energie durch Einströmen von erwärmter Luft von unten.
Während des Aufenthaltes des Guts in dem Behälter wird es mit Energie beaufschlagt und dadurch pyrolysiert und vergast. Der Energieeintrag erfolgt im Anfahrprozeß durch die direkte Einbringung und Beaufschlagung des Gutes mit erwärmter Luft und nach dem Einsetzen der Vergasung durch teilweise Verbrennung der entstandenen Gase. Der Energieeintrag ist dabei quantitativ aufgeteilt. Zwischen 60 und 80 %, vorteilhafterweise 70 %, der eingebrachten Energie werden ca. Im ersten Viertel des Behälters auf das Gut aufgebracht. In den restlichen drei Vierteln des Behälters werden die verbleibenden 20 bis 40 %, vorteilhafterweise in jedem weiteren Viertel des Behälters jeweils 10 %, der Energie aufgebracht. Der Energieeintrag erfolgt über erwärmte Luft direkt auf das Gut.

Beim Anfahren des Prozesses wird in diesem Bereich des Behälters durch Energiezuführung ein Art Glutbett von glühenden, thermisch zersetzten Abprodukten und Abfallstoffen erzeugt, welches durch das nachfolgend herantransportierte vorgewärmte Gut immer wieder gespeist wird. Dabei wird eine maximale Temperatur von 600 -700 °C im Behälter realisiert. Dieses Glutbett wird ebenfalls in Richtung auf die Austragsöffnung weitertransportiert und anschließend durch die schleusenartige gemeinsame Austragsöffnung für das Abgas-Feststoffgemisch ausgetragen. Diese festen Zersetzungsprodukte sind von koksartiger Natur.

Die Glut wird in diesem Glutbett durch die nachfolgende Zufuhr von zu zersetzendem Gut und durch die Zuführung von Sauerstoff oder Luft aufrechterhalten.
Unterhalb des Glutbettes befindet sich, vorteilhafterweise über die gesamte Länge des Bereiches für die thermische Zersetzung eine Vorrichtung für die dosierbare Zuführung von Luft oder Sauerstoff.

Durch die gezielte und dosierte Zuführung von Luft oder Sauerstoff In den Bereich der thermischen Zersetzung wird eine steuerbare thermische Zersetzung erreicht, die hinsichtlich ihrer Temperaturführung sehr genau über die Menge an zugeführter Luft oder Sauerstoff geregelt werden kann. Je mehr Luft oder Sauerstoff zugeführt werden, um so höher ist die Temperatur im Bereich der thermischen Zersetzung des Behälters.

Die thermische Zersetzung ist erfindungsgemäß ein gesteuerter Prozeß zwischen Pyrolyse und Verbrennung des eingebrachten Gutes.
Es erfolgt jedoch erfindungsgemäß keine vollständige Verbrennung des eingebrachten Gutes, da immer nur in unterstöchiometrischer Menge Luft oder Sauerstoff dem Prozeß zugeführt wird und in jedem Fall frei werdender Sauerstoff durch die in dem Bereich angeordnete offenen Flamme verbrannt wird.
Dadurch ist es möglich, den Prozeß nicht unter absolut gasdichten Bedingungen führen zu müssen, was zu einer erheblich kostengünstigeren Vorrichtung führt. Auch sind dadurch die Sicherheitsanforderungen nicht mehr so hoch

Nach dem Anfahren des Prozesses erfolgt die thermische Zersetzung unter Freisetzung von Energie.

Im Bereich der thermischen Zersetzung in dem Behälter werden steuerbar Temperaturen bis 900 °C erzeugt und aufrechterhalten. Vorteilhafterweise werden Temperaturen zwischen 400 und 800 °C eingestellt.

Bei der thermischen Zersetzung entsteht neben den festen Zersetzungsprodukten, im Wesentlichen bestehend aus Kohlenstoff, auch ein Rohgas mit einer Temperatur von 700 - 800 °C. Diese werden als Abgas-Feststoffgemisch über die gemeinsame Austragsöffnung aus dem Behälter abgezogen und über Rohrleitungen einer Vorrichtung zum Vercracken der langkettigen Kohlenwasserstoffe und/oder einer Vorrichtung zur Vergasung der Feststoffe zugeführt. Auf diese Art und Weise werden die Abgase und Feststoffe aus dem Behälter weiter energetisch aufbereitet.

Vorteilhafterweise wird in den rohrförmigen Behälter im Bereich der Austragsöffnung eine Zündquelle eingebaut. Diese Zündquelle kann ein Brenner mit einer offenen Flamme oder eine Glühwendel sein. Sie dienen dazu möglicherweise noch vorhandenen Sauerstoff vor Austrag des Abgas-Feststoffgemisches aus dem Behälter zu verbrennen.

Weiterhin ist vorteilhafterweise im oberen Bereich des rohrförmigen Behälters Im Bereich der Austragsöffnung eine Druckentlastungsöffnung angebracht. Diese öffnet sich bei Erreichen eines Überdruckes Im rohrförmigen Behälter, der jedoch bei Durchführung des erfindungsgemäßen Verfahrens nicht auftritt. Bei Störungen oder Havarlen wird so ein möglicherweise auftretender überdruck im rohrförmigen Behälter abbaubar. Diese Druckentlastungsöffnung kann als Klappe oder als gewichtsbelastetes Sicherheitsventil ausgebildet sein.

### Bester Weg zur Ausführung der Erfindung

Im Weiteren wird die Erfindung an einem Ausführungsbeispiel näher erläutert.

Ein zylindrischer feststehender Behälter mit den Abmaßen Länge 8000 mm, Innendurchmesser 1600 mm weist im oberen linken Bereich eine Eintragsöffnung auf, durch die das vorgewärmten Gut in den Behälters transportiert wird. Der Behälter weist weiterhin im linken unteren Teil eine Brenneröffnung auf. Über die gesamte Länge des Behälters ist im Inneren eine Welle mit Paddeln mittig zum Behälter angeordnet. Diese rohrförmige Welle mit Paddeln wird über einen Motor angetrieben, der außerhalb des Behälters angeordnet ist.

Im unteren Bereich des Behälters ist über dessen gesamte Länge eine Zuführung für erwärmte Luft angeordnet. Die Austragsöffnung dient zum Abzug des gesamten am Ende des Behälters ankommenden Abgas-Feststoffgemisches.

Eingesetzt werden Abprodukte und Abfallstoffe aus der Papierindustrie, die folgende Zusammensetzung aufweisen.
Papier- und Pappreste, klumpig, 1.0 bis 3,0 cm Kantenlänge,
Holzstücke, mechanisch aufgebrochen, teilweise fasrige Oberfläche, 0,5 bis 5 cm Kantenlänge,
PE-Folie und Kunststoffreste, teilweise in Klumpen, bis 10 cm²,
Gummistücken, als Streifen und Schnüre, verwickelt, 0,5 bis 3,0 cm,
Textilreste, zerfasert als Stücke, 1 cm² bis 5 cm²,
Eisenmetall, als Drahtstücken, Blechstreifen und in zerkleinerter Form geschreddert, 0,5 bis 3 mm Kantenlänge bzw. Durchmesser,
Alufolie, als Stücke oder zerknüllt bis 2cm Knülldurchmesser,
Weißblech, Getränkedosen, zerdrückt.
Das Rohgewicht dieser Produkte und Stoffe beträgt ca. 0,35 kg/dm³.
Der Wassergehalt beträgt ca. 40 %.

Diese Produkte und Stoffe werden mit Reißwalzen zerteilt. Der Durchsatz beträgt 5 t/h. Anschließend wird das zerteilte Gut mit einem Magneten bearbeitet und die selektierten Metallteile entfernt. Danach wird das Gut über ein Fördersystem in einen Trockenturm transportiert, in dem es auf ca. 80 °C erwärmt und das Wasser entzogen wird. Die Verweilzeit im Trockenturm beträgt ca. 1,5 h.

Danach wird das getrocknete Gut über Förderbänder und die Eintragsöffnung, die als Stopfschnecke mit Absperrschieber ausgebildet ist, im linken oberen Teil des Behälters kontinuierlich in den Behälter gefördert. Im dem Behälter wird das Gut mit der Welle mit Paddeln in Richtung der Austragsöffnung hin mit einer Drehzahl von 5 - 7 U/min befördert. Dabei wird die restliche Feuchtigkeit entzogen.
Im unteren Bereich der Eintragsöffnung befindet sich unterhalb der Roste im Behälter eine Zuführung für erwärmte Luft. In der Zuführungsstrecke ist ein Brenner positioniert, der die ankommende Luft auf die erforderliche Temperatur von 600 °C erwärmt. Durch die direkte Beaufschlagung der erwärmten Luft auf das im ersten Viertel eingebrachte Gut wird ein Glutbett erzeugt, daß durch das nachgeförderte Gut gespeist und die Glut durch die erwärmte Luft (3,2 m³/h) und durch die einsetzende teilweise Verbrennung der entstandenen Gase aufrechterhalten wird. Das eingebrachte Gut wird thermisch zersetzt und die festen Zersetzungsprodukte in Form von 95 - 98 % kristallinem Kohlenstoff, dem sogenannten Pyrolysekoks, werden aus der Austragsöffnung zusammen mit dem Abgas ausgetragen und einer weiteren energetischen Aufbereitung zugeführt.

Im Bereich der thermischen Zersetzung herrschen nach dem Anfahren des Prozesses Temperaturen von ca. 700 °C. Zum Anfahren des Prozesses wird die Temperatur durch die einströmende erwärmte Luft erzeugt. Danach wird die Energie weiterhin über erwärmte Luft und durch die einsetzende teilweise Verbrennung der entstandenen Gase eingetragen. Die erwärmte Luft strömt von unten durch die Rost zu dem Gut und hält die erforderliche Temperatur im Glutbett aufrecht bis zur Austragsöffnung.

Das entstandene Abgas-Feststoffgemisch wird nach dem Behälter über Rohrleitungen einer Vorrichtung zum Vercracken der langkettigen Kohlenwasserstoffe zugeleitet und von dort in eine Vorrichtung zur Vergasung der Feststoffe überführt. Die so weiter energetisch aufbereiteten Stoffe können als Heizgas für andere thermische Prozesse zur Verfügung gestellt werden. Der Restfeststoff hat zu 90 % mineralische Bestandteile und kann als Asche entsorgt werden.

## Patentansprüche

1. Verfahren zur Beseitigung von Abprodukten und Abfallstoffen mittels einer gesteuerten thermischen Zersetzung, die ein gesteuerter Prozess zwischen Pyrolyse und Verbrennung ist, bei dem die Abprodukte und Abfallstoffe als Gut zerteilt, selektiert und vorgewärmt und/oder getrocknet werden und danach in einen waagerecht angeordneten, feststehenden rohrförmigen Behälter an der Aufgabeseite eingebracht und in diesem kontinuierlich oder diskontinuierlich mittels einer Transportvorrichtung in Form einer mittig durch den Behälter geführten Welle zur Austragsseite des Behälters transportiert werden, und wobei über im unteren Bereich über die gesamte Länge des Behälters befindliche Roste zur Aufnahme des Gutes im Bereich der Seite des Guteintrages im ersten Viertel des Behälters 60 - 80 % des Energieeintrages direkt auf das Gut mittels erwärmter Luft durchgeführt werden und in den anderen Bereichen des Behälters die restlichen 20 - 40 % der Energie direkt auf das Gut mittels erwärmter Luft übertragen werden, an der anderen Seite des Behälters das gesamte Abgas-Feststoffgemisch gemeinsam aus dem Behälter über eine gemeinsame Austragsöffnung abgezogen und anschließend eine energetische Aufbereitung der Abgase und des Feststoffes durch Vercrackung und/oder Vergasung durchgeführt wird.

2. Verfahren nach Anspruch 1, bei dem das eingebrachte Gut eine Restfeuchtigkeit von 10 % aufweist.

3. Verfahren nach Anspruch 1, bei dem das Gut kontinuierlich mit einer Geschwindigkeit von 18 m/h zur Austragsöffnung transportiert wird.

4. Verfahren nach Anspruch 1, bei dem im ersten Viertel des Behälters ein Energieeintrag auf das Gut von 70 % durchgeführt wird.

5. Verfahren nach Anspruch 1, bei dem in jedem weiteren Viertel des Behälters ein Energieeintrag von je 10 % durchgeführt wird.

6. Verfahren nach Anspruch 1, bei dem zum Anfahren des Prozesses eine maximale Temperatur von 600 - 700 °C im Behälter realisiert wird.

7. Verfahren nach Anspruch 1, bei dem nach dem Behälter das abgezogene Abgas-Feststoffgemisch in eine Vorrichtung zum Vercracken der langkettigen Kohlenwasserstoffe eingeleitet wird.

8. Verfahren nach Anspruch 1, bei dem nach dem Behälter das abgezogene Abgas-Feststoffgemisch oder nach dem Vercracken der langkettigen Kohlenwasserstoffe das Abgas-Feststoffgemisch einer Vorrichtung zum Vergasen zugeführt wird.

9. Verfahren nach Anspruch 8, bei dem die Vergasung bei unterstöchiometrischer Luftzufuhr durchgeführt wird.

10. Verfahren nach Anspruch 8, bei dem der Vergasungsprozeß über den teilweisen Verbrennungsprozeß geregelt wird.

11. Verfahren nach Anspruch 8, bei dem dem Vergasungsprozeß Wasserdampf zugegeben wird.

12. Vorrichtung zur Beseitigung von Abprodukten und Abfallstoffen mittels einer gesteuerten thermischen Zersetzung, die ein gesteuerter Prozess zwischen Pyrolyse und Verbrennung ist, bestehend aus einem waagerecht angeordneten, feststehenden rohrförmigen Behälter mit einer Eintragsöffnung für die Abprodukte und Abfallstoffe als Gut auf einer Seite und mit einer gemeinsamen Austragsöffnung für das Abgas-Feststoffgemisch auf der anderen Seite, einer mittig durch den Behälter geführten Welle, an der sich Vorrichtungen zum Transport des Gutes befinden, und einer Vorrichtung zum Energieeintrag mittels erwärmter Luft direkt auf die Abprodukte und Abfallstoffe, und einer Vorrichtung zum Vercracken von Kohlenwasserstoffen und/oder einer Vorrichtung zur Vergasung der Feststoffe aus dem Behälter, die nach der Austragsöffnung des Behälter angeordnet sind.

13. Vorrichtung nach Anspruch 12, bei der der rohrförmige Behälter aus Stahlblech und doppelwandig aufgebaut ist.

14. Vorrichtung nach Anspruch 12, bei der die Eintragsöffnung als Stopfschnecke mit Absperrschieber im oberen vorderen Bereich des Behälters angeordnet ist.

15. Vorrichtung nach Anspruch 12, bei der ein Brenner im unteren vorderen Bereich des Behälters angeordnet ist.

16. Vorrichtung nach Anspruch 12, bei der die Welle rohrförmig ausgebildet ist.

17. Vorrichtung nach Anspruch 12, bei der die Vorrichtungen zum Transport des Gutes Paddel sind.

18. Vorrichtung nach Anspruch 12, bei der die Paddel angestellte Flächen aufweisen.

19. Vorrichtung nach Anspruch 12, bei der die Vorrichtungen an der Welle mit Keilverbindungen befestigt sind.

20. Vorrichtung nach Anspruch 12, bei der die Welle außerhalb des Behälters gelagert ist.

21. Vorrichtung nach Anspruch 12, bei dem im unteren Bereich über die gesamte Länge des Behälters Roste zur Aufnahme des Gutes angeordnet sind.

22. Vorrichtung nach Anspruch 12, bei der nach dem Behälter eine Vorrichtung zum Vercracken der langkettigen Kohlenwasserstoffe und eine Vorrichtung zum Vergasen des Abgas-Feststoffgemisches angeordnet sind.

23. Vorrichtung nach Anspruch 22, bei der die Vercrackung und Vergasung in einer gemeinsamen Vorrichtung durchgeführt wird.

24. Vorrichtung nach Anspruch 12, bei dem der rohrförmige Behälter im Bereich der Austragsöffnung eine Zündquelle aufweist.

25. Vorrichtung nach Anspruch 24, bei der die Zündquelle ein Brenner mit einer offenen Flamme oder eine Glühwendel ist.

26. Vorrichtung nach Anspruch 12, bei der der rohrförmige Behälter im oberen Teil im Bereich der Austragsöffnung eine Druckentlastungsöffnung aufweist.

27. Vorrichtung nach Anspruch 26, bei der die Druckentlastungsöffnung eine Klappe oder ein gewichtsbelastetes Sicherheitsventil ist.

## Claims

1. Method for removing recoverable waste products and non-recoverable waste products by means of controlled thermal decomposition, which is a controlled process between pyrolysis and combustion, in which the recoverable waste products and non-recoverable waste products as material are dispersed, selected and preheated and/or dried and, after that, are introduced into a horizontally arranged, stationary tubular container on the input side and, in the latter, are transported continuously or discontinuously to the discharge side of the container by means of a transport device in the form of a shaft led centrally through the container, and, via grates located in the lower region over the entire length of the container to accommodate the material in the region of the side of the material input, in the first quarter of the container, 60 - 80% of the energy being put directly into the material by means of heated air and, in the other regions of the container, the remaining 20 - 40% of the energy being transferred directly to the material by means of heated air, on the other side of the container, the whole of the waste gas/solids mixture being drawn off jointly from the container via a common discharge opening and then energy conditioning of the waste gases and the solids being carried out by means of cracking and/or gasification.

2. Method according to Claim 1, in which the material introduced has a residual moisture content of 10%.

3. Method according to Claim 1, in which the material is transported continuously towards the discharge opening at a speed of 18 m/h.

4. Method according to Claim 1, in which, in the first quarter of the container, 70% of the energy is input into the material.

5. Method according to Claim 1, in which, in each further quarter of the container, in each case 10% of the energy is input.

6. Method according to Claim 1, in which, in order to start up the process, a maximum temperature of 600 - 700° C in the container is realized.

7. Method according to Claim 1, in which, after the container, the waste gas/solids mixture drawn off is led into a device for cracking the long-chain hydrocarbons.

8. Method according to Claim 1, in which, after the container, the waste gas/solids mixture drawn off or, after the cracking of the long-chain hydrocarbons, the waste gas/solids mixture, is fed to a device for gasification.

9. Method according to Claim 8, in which the gasification is carried out with a substoichiometric supply of air.

10. Method according to Claim 8, in which the gasification process is regulated via the partial combustion process.

11. Method according to Claim 8, in which steam is added to the gasification process.

12. Device for removing recoverable waste products and non-recoverable waste products by means of controlled thermal decomposition, which is a controlled process between pyrolysis and combustion, comprising a horizontally arranged, stationary tubular container having an input opening for the recoverable waste products and non-recoverable waste products as material on one side, and having a common discharge opening for the waste gas/solids mixture on the other side, a shaft led centrally through the container, on which there are devices for transporting the material, and a device for putting energy directly into the recoverable waste products and non-recoverable waste products by means of heated air, and a device for cracking hydrocarbons and/or a device for gasifying the solids from the container, which are arranged after the discharge opening of the container.

13. Device according to Claim 12, in which the tubular container is constructed from sheet steel and is double-walled.

14. Device according to Claim 12, in which the input opening is arranged as a plug screw with gate valve in the upper front region of the container.

15. Device according to Claim 12, in which a burner is arranged in the lower front region of the container.

16. Device according to Claim 12, in which the shaft is of tubular construction.

17. Device according to Claim 12, in which the devices for the transport of the material are paddles.

18. Device according to Claim 12, in which the paddles have pitched faces.

19. Device according to Claim 12, in which the devices are fixed to the shaft by wedge connections.

20. Device according to Claim 12, in which the shaft is mounted outside the container.

21. Device according to Claim 12, in which grates to hold the material are arranged over the entire length of the container in the lower region.

22. Device according to claim 12, in which a device for cracking the long-chain hydrocarbons and a device for gasifying the waste gas/solids mixture are arranged after the container.

23. Device according to Claim 22, in which the cracking and gasification are carried out in a common device.

24. Device according to Claim 12, in which the tubular container has an ignition source in the region of the discharge opening.

25. Device according to Claim 24, in which the ignition source is a burner with an open flame or an incandescent filament.

26. Device according to Claim 12, in which the tubular container has a pressure relief opening in the upper part in the region of the discharge opening.

27. Device according to Claim 26, in which the pressure relief opening is a flap or a weight-loaded safety valve.

## Revendications

1. Procédé permettant d'éliminer des produits de récupération et des déchets au moyen d'une décomposition thermique contrôlée, qui est un processus contrôlé entre la pyrolyse et la combustion, dans lequel les produits de récupération et les déchets sont, comme matière première, divisés, sélectionnés et préchauffés et/ou séchés et sont ensuite introduits du côté de chargement dans une enceinte tubulaire immobile, disposée horizontalement, et sont transportés dans celle-ci, en mode continu ou discontinu, au moyen d'un dispositif de transport sous la forme d'un arbre guidé au milieu à travers l'enceinte jusqu'au côté de déchargement de l'enceinte, et dans lequel 60-80 % de l'apport d'énergie sont fournis directement à la matière première au moyen d'air réchauffé, dans le premier quart de l'enceinte, dans la région de chargement de la matière première, par l'intermédiaire de grilles de réception de la matière première qui se trouvent dans la région inférieure sur toute la longueur de l'enceinte, et les 20-40 % restants de l'apport d'énergie sont fournis directement à la matière première au moyen d'air réchauffé dans les autres zones de l'enceinte, tout le mélange de gaz d'échappement et de matières solides est extrait hors de l'enceinte, sur l'autre côté de l'enceinte, par l'intermédiaire d'une ouverture de déchargement commune, et une préparation énergétique des gaz d'échappement et des matières solides est ensuite effectuée par craquage et/ou gazéification.

2. Procédé selon la revendication 1, dans lequel la matière première introduite présente une humidité résiduelle de 10 %.

3. Procédé selon la revendication 1, dans lequel la matière première est transportée en mode continu avec une vitesse de 18 m/h jusqu'à l'ouverture de déchargement.

4. Procédé selon la revendication 1, dans lequel un apport d'énergie de 70 % à la matière première est effectué dans le premier quart de l'enceinte.

5. Procédé selon la revendication 1, dans lequel un apport d'énergie de 10 % est effectué dans chaque quart suivant de l'enceinte.

6. Procédé selon la revendication 1, dans lequel on réalise une température maximale de 600-700°C dans l'enceinte pour le démarrage du processus.

7. Procédé selon la revendication 1, dans lequel le mélange de gaz d'échappement et de matières solides extrait est introduit, après l'enceinte, dans un dispositif de craquage des hydrocarbures à longue chaîne.

8. Procédé selon la revendication 1, dans lequel le mélange de gaz d'échappement et de matières solides extrait après l'enceinte, ou le mélange de gaz d'échappement et de matières solides après le craquage des hydrocarbures à longue chaîne, est envoyé à un dispositif de gazéification.

9. Procédé selon la revendication 8, dans lequel la gazéification est effectuée avec un apport d'air sous-stoechiométrique.

10. Procédé selon la revendication 8, dans lequel le processus de gazéification est régulé au moyen du processus de combustion partielle.

11. Procédé selon la revendication 8, dans lequel de la vapeur d'eau est ajoutée au processus de gazéification.

12. Dispositif permettant d'éliminer des produits de récupération et des déchets au moyen d'une décomposition thermique contrôlée, qui est un processus contrôlé entre la pyrolyse et la combustion, se composant d'une enceinte tubulaire immobile, disposée horizontalement, avec une ouverture de chargement pour les produits de récupération et les déchets comme matière première sur un côté et avec une ouverture de déchargement commune pour le mélange de gaz d'échappement et de matières solides sur l'autre côté, d'un arbre guidé au milieu à travers l'enceinte sur lequel il se trouve des dispositifs pour le transport de la matière première, et d'un dispositif d'apport d'énergie au moyen d'air réchauffé directement aux produits de récupération et aux déchets, et d'un dispositif pour le craquage des hydrocarbures et/ou d'un dispositif pour la gazéification des matières solides hors de l'enceinte, qui sont disposés après l'ouverture de déchargement de l'enceinte.

13. Dispositif selon la revendication 12, dans lequel l'enceinte tubulaire est construite en tôle d'acier et avec une double paroi.

14. Dispositif selon la revendication 12, dans lequel l'ouverture de chargement est disposée sous la forme d'une vis sans fin de bourrage avec une vanne d'arrêt dans la région antérieure haute de l'enceinte.

15. Dispositif selon la revendication 12, dans lequel un brûleur est disposé dans la région antérieure basse de l'enceinte.

16. Dispositif selon la revendication 12, dans lequel l'arbre est de forme tubulaire.

17. Dispositif selon la revendication 12, dans lequel les dispositifs pour le transport de la matière première sont des palettes.

18. Dispositif selon la revendication 12, dans lequel les palettes présentent des faces réglées.

19. Dispositif selon la revendication 12, dans lequel les dispositifs sont fixés sur l'arbre avec des assemblages par clavettes.

20. Dispositif selon la revendication 12, dans lequel l'arbre est supporté à l'extérieur de l'enceinte.

21. Dispositif selon la revendication 12, dans lequel des grilles destinées à recevoir la matière première sont disposées dans la région inférieure sur toute la longueur de l'enceinte.

22. Dispositif selon la revendication 12, dans lequel un dispositif de craquage des hydrocarbures à longue chaîne et un dispositif de gazéification du mélange des gaz d'échappement et des matières solides sont disposés après l'enceinte.

23. Dispositif selon la revendication 22, dans lequel le craquage et la gazéification sont effectués dans un dispositif commun.

24. Dispositif selon la revendication 12, dans lequel l'enceinte tubulaire présente une source d'ignition dans la région de l'ouverture de déchargement.

25. Dispositif selon la revendication 24, dans lequel la source d'ignition est un brûleur à flamme nue ou un filament incandescent.

26. Dispositif selon la revendication 12, dans lequel l'enceinte tubulaire présente une ouverture de détente de pression dans la partie supérieure dans la région de l'ouverture de déchargement.

27. Dispositif selon la revendication 26, dans lequel l'ouverture de détente de pression est un clapet ou une soupape de sécurité à ressort.
